# EUROPÄISCHE PATENTSCHRIFT

(11) **EP 0 891 901 B1**
(45) Veröffentlichungstag und Bekanntmachung des Hinweises auf die Patenterteilung: **17.12.2003**
(21) Anmeldenummer: 98112426.6
(22) Anmeldetag: 04.07.1998
(51) Int. Cl.: B60R 21/20

(54) **Knieschutz in einem Kraftfahrzeug**
Knee bolster in an automotive vehicle
Dispositif de protection des genoux dans un véhicule automobile

(30) Priorität: 16.07.1997 DE 19730397
(43) Veröffentlichungstag der Anmeldung: 20.01.1999
(73) Patentinhaber: DaimlerChrysler AG, 70567 Stuttgart (DE)
(72) Erfinder: Bossenmaier, Alban, 71126 Gäufelden (DE)

(56) Entgegenhaltungen:
- EP-A- 0 684 164
- EP-A- 0 719 678
- DE-U- 29 611 869
- US-A- 5 344 184

## Beschreibung

Die Erfindung betrifft einen Knieschutz in einem Kraftfahrzeug gemäß dem Oberbegriff des Anspruches 1.

Bekannt ist es, als Knieschutz in einem Kraftwagen eine Lastverteilerplatte vor einem Knieairbag anzuordnen, die beim Crash durch den sich befüllenden Airbag in Richtung auf die Knie eines Insassen verschoben wird. Eine derartige Lastverteilerplatte wird als gestreckte Metallplatte gefertigt oder weist eine umschäumte, einteilige Metalleinlage auf, die beim Erstanprall die Belastung über die Plattenfläche verteilt in den Airbag einleitet, wonach der Airbag entleert ist und mit der Lastverteilerplatte nach unten hängt. Die Metallplatte kann sich durch die Belastung verbiegen oder kann brechen. Bei einem nun auftretenden Sekundäranprall des Insassen trifft dieser mit den Knien auf eine Begrenzungskante der Lastverteilerplatte auf und kann sich am harten Metall verletzen.

Aus der EP 0 684 164 A1 ist eine durch einen Airbag verschiebbare Lastverteilerplatte bekannt, die sich unter der Belastung beim Erstanprall der Knie auf die Plattenfläche verbiegen kann oder bricht. Die anschließend mit dem Airbag nach unten hängende Lastverteilerplatte kann nun beim Sekundäranprall des Insassen zu Verletzungen führen, da die nach vorne eingeknickte Lastverteilerplatte einer Verformung von der oberen Begrenzungskante her einen hohen Widerstand entgegensetzt bzw. die gebrochene Lastverteilerplatte an den Bruchstellen scharfkantig ist.

In der DE 44 18 628 A1 ist eine Prallplatte über einem Knieschutzairbag an einer Lenksäule beschrieben, welche bei der Befüllung auf die Seite verschwenkt wird, also nicht am Erstanprall des Insassen bei einem Crash beteiligt ist. Die Prallplatte ist weich und nachgiebig gestaltet, da sie keine wesentliche Verformungsarbeit verrichten muss.

In der DE 20 63 478 A1 ist ein Knieschutz in einem Kraftwagen gezeigt, welcher einen gasbefüllbaren Airbag mit einer an der dem Fahrzeuginsassen zugewandten Oberfläche angeordneten, elastischen Schutzschicht gegen eine Beschädigung des Airbags umfasst, die bei befülltem Airbag nicht mehr zwischen dem Airbag und dem Insassen liegt.

Weiterhin sind aus der DE 43 01 906 A1 und der DE 43 02 891 A1 Airbaganordnungen zum Schutz der Knie eines anprallenden Insassen bei einem Crash eines Kraftwagens bekannt.

Aus der DE 296 11 869 U1 ist eine Lastverteilerplatte bekannt, die aus einer Grundplatte besteht, die auf ihrer dem Fahrgastraum zugewandten Seite mit Schaum versehen ist. Die Grundplatte besteht aus extrudiertem Kunststoff und weist ein Verstärkungsblech auf, so dass sie in Erstreckungsrichtung eine steife Einheit darstellt.

Die Aufgabe der Erfindung besteht darin, bei einem Knieschutz eine beim Erstanprall senkrecht zu ihrer Erstreckungsebene belastete Lastverteilerplatte für den Sekundäranprall des Insassen auf eine Begrenzungskante zu verbessern.

Die Aufgabe wird durch die kennzeichnenden Merkmale des Patentanspruches 1 gelöst.

Durch die Lastverteilerplatte vor dem Airbag wird ein punktuelles Eindringen der Knie des Insassen in den Airbag verhindert und die eingeleiteten Kräfte entsprechend der Plattenfläche auf das Airbagvolumen verteilt, weshalb ein Airbag mit einem geringeren Volumen oder mit geringerem Innendruck und damit ein Gasgenerator mit geringerer Leistung verwendbar ist.

Bei Erreichen eines einen Schwellwert überschreitenden Innendruckes im Airbag wird Gas durch das Gewebe oder spezielle Abstromöffnungen herausgedrückt und nach dem Erstanprall kein Gas mehr vom Gasgenerator geliefert, so dass der Airbagsack mit der Lastverteilerplatte schlaff herunterhängt. Bei einem nachfolgenden Sekundäranprall des Insassen auf die Lastverteilerplatte wird diese bevorzugt an einer oberen Begrenzungskante in Richtung ihrer Erstreckung getroffen, wobei die Lastverteilerplatte in dieser Richtung nachgiebig ausgebildet ist, und dem Insassen keinen großen Widerstand entgegensetzt. Die Lastverteilerplatte ist so ausgelegt, dass sie nach der Erstbelastung annähernd ihre ursprüngliche Form wieder einnimmt, vor allem in die Höhe keinen Knick aufweist, so dass die Verformung beim Sekundäranprall beim Anprall der Knie des Insassen an einer Begrenzungskante und in Richtung der Erstreckung der Lastverteilerplatte nicht behindert wird.

Hierzu kann die Lastverteilerplatte aus Hartschaum, wie z. B. aus glasfaserverstärktem PU-Schaumstoff hergestellt werden, wodurch für den Erstanprall auf die Plattenfläche ein ausreichender Verformungswiderstand und die notwendige Elastizität gegeben ist, während beim Sekundäranprall auf eine Begrenzungskante eine Verformung der Lastverteilerplatte in ihrer Erstreckungsebene möglich ist.

Zur Erhöhung des Verformungswiderstandes beim Erstanprall auf die Plattenfläche kann die Lastverteilerplatte zum Insassen hin gewölbt ausgebildet sein. Bei stabilem Material ist es andererseits möglich, die Lastverteilerplatte in einem Querschnitt zwischen einer obenliegenden und einer untenliegenden Begrenzungskante gewellt auszubilden, damit sie beim Sekundäranprall nachgiebig reagiert.

Des weiteren ist es möglich, die Lastverteilerplatte mit Lamellen auszubilden, die z. B. einen runden oder einen länglich gestreckten Querschnitt aufweisen können, welche derart in der Lastverteilerplatte ausgebildet und angeordnet sind, dass sie beim Erstanprall einen hohen Verformungswiderstand der Lastverteilerplatte bewirken und beim Sekundäranprall mit von einer Begrenzungskante ausgehender Belastung mit geringerem Widerstand zusammendrückbar sind.

Die Lastverteilerplatte kann bei unbefülltem Airbag die Aufgabe einer Airbagabdeckung übernehmen und in eine Instrumententafel eingepaßt liegen und bei der Gasbefüllung des Airbags durch außerhalb des Airbags verlaufende Fangbänder im Fahrzeug gehalten werden.

Weitere Vorteile und Ausgestaltungen gehen aus den Unteransprüchen und der Beschreibung hervor.

Die Erfindung ist nachstehend anhand einer Zeichnung näher beschrieben.

Es zeigen:
- Fig. 1a: eine Ansicht einer Instrumententafel mit einem Knieschutz,
- Fig. 1b: einen Schnitt durch die Instrumententafel entlang der Schnittlinie I-I in Fig. 1a,
- Fig. 2a: die Ansicht des Knieschutzes an der Instrumententafel kurz vor dem Erstanprall der Insassenknie,
- Fig. 2b: einen Schnitt durch die Instrumententafel entlang der schnittlinie II-II in Fig. 2a,
- Fig. 3a: die Ansicht des Knieschutzes beim Sekundäranprall,
- Fig. 3b: einen Schnitt durch die Instrumententafel entlang der Schnittlinie III-III in Fig. 3a, mit einer Lastverteilerplatte aus Hartschaum,
- Fig. 4: den Fig. 3b entsprechenden Schnitt, mit einer Lastverteilerplatte mit Lamellen mit rundem Querschnitt, und
- Fig. 5: den Fig. 3b entsprechenden Schnitt, mit einer Lastverteilerplatte mit Lamellen mit ovalem Querschnitt.

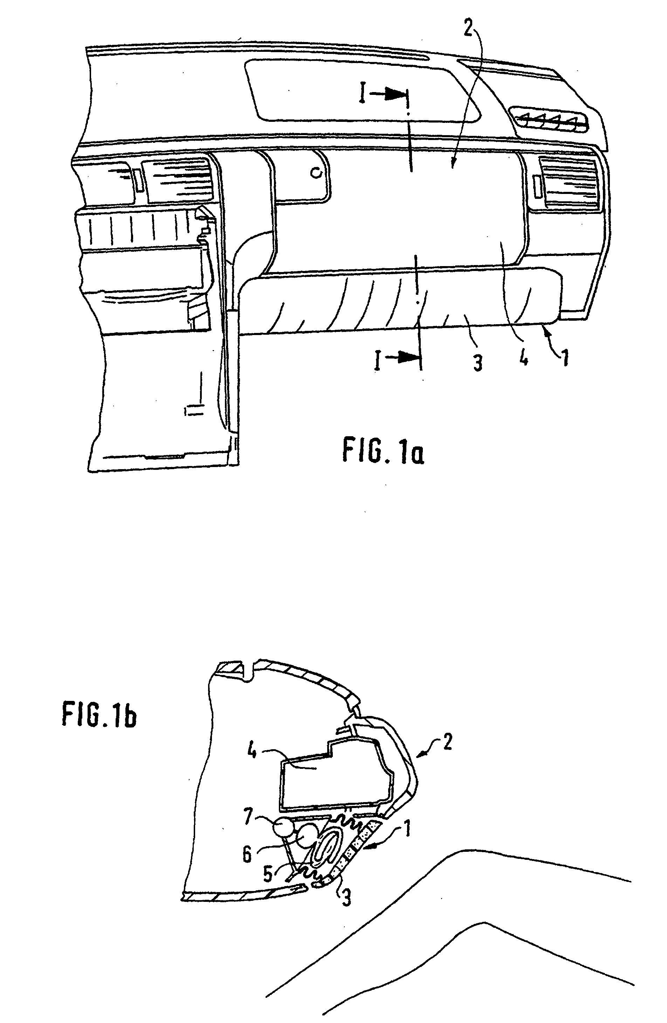

Die Figuren 1a und 1b zeigen einen Knieschutz 1 im unteren Bereich der Instrumententafel 2 in einem Kraftwagen, welcher eine in die Instrumententafel 2 flächig integrierte Lastverteilerplatte 3 aufweist, hinter der, unterhalb des Handschuhfaches 4, ein zusammengefalteter Airbag 5 ruht, der an einen Rohrgasgenerator 6 angeschlossen ist, welcher an einem Fahrzeugquerträger 7 abgestützt ist.

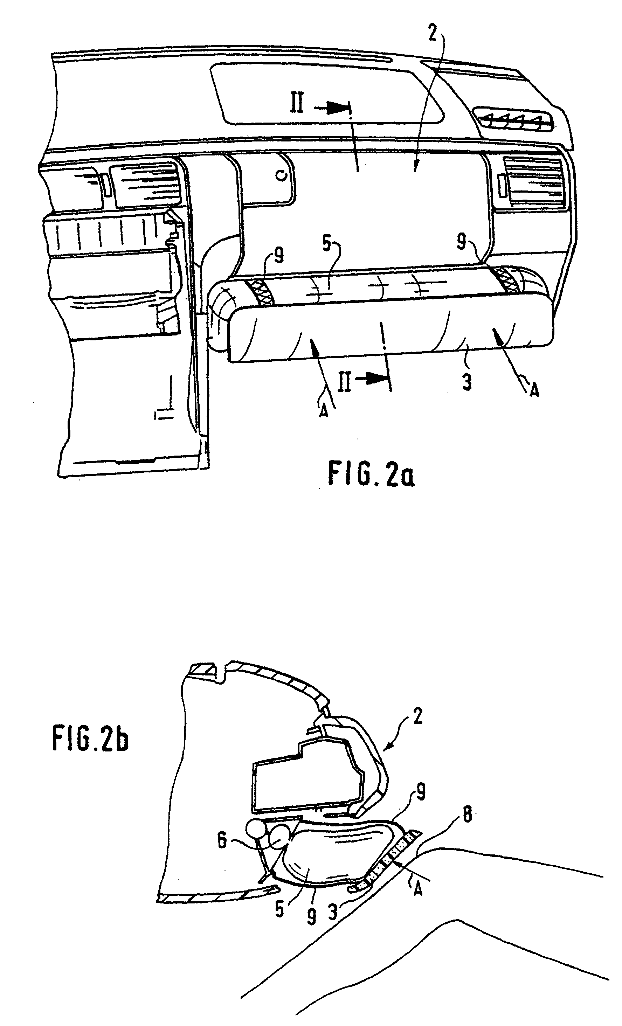

Bei einem Fahrzeugcrash, bei dem ein Sensor den Rohrgasgenerator 6 aktiviert, wird, wie in den Figuren 2a und 2b dargestellt ist, der Airbag 5 mit Gas befüllt, wodurch er sich aus der Instrumententafel 2 in Richtung auf die Knie 8 eines Insassen hervorbewegt. Dabei führt er die Lastverteilerplatte 3 mit sich, die durch außerhalb des Airbags 5 verlaufende Fangbänder 9 an der Instrumententafel 2 weiterhin gehalten wird. Bei einem nun erfolgenden Erstanprall der Insassenknie 8 in Richtung der Pfeile A auf die Lastverteilerplatte 3 verteilt diese über ihre Fläche die Belastung auf das Airbagvolumen, so daß keine örtliche hohe Belastung auf den Airbag 5 trifft, und dieser deshalb mit geringerem Volumen oder geringerem Innendruck ausgebildet werden kann, wodurch auch ein Rohrgasgenerator 6 mit geringerer Leistung verwendbar ist.

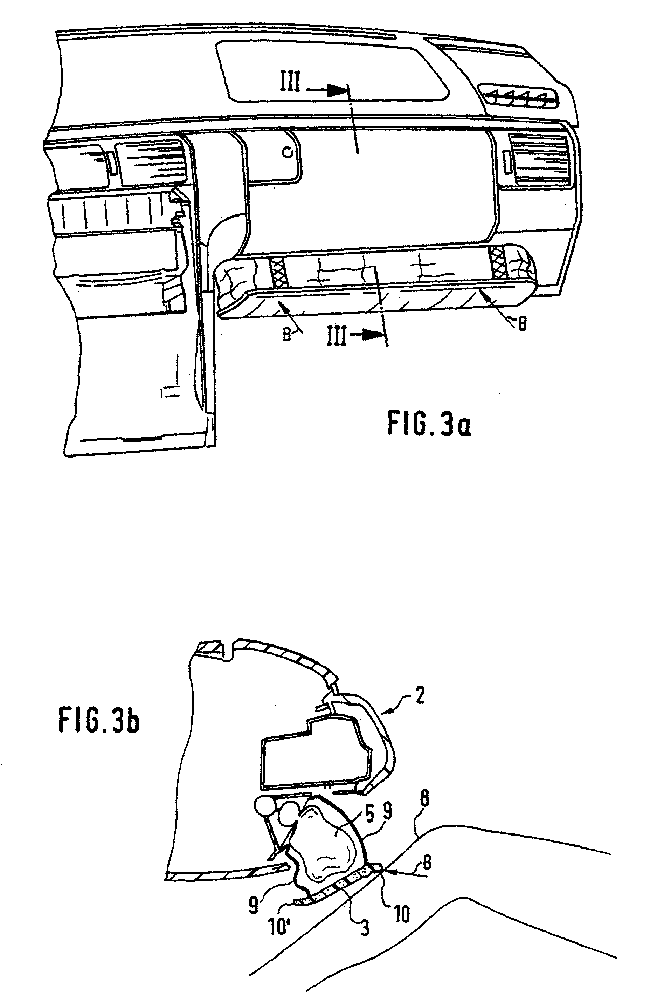

Zeitlich später während des Crashes kann der Insasse ein weiteres Mal in Richtung auf die Instrumententafel 2 bewegt werden, wie es die Figuren 3, 3a, 4 und 5 zeigen, wobei er nun bei einem Sekundäranprall in Richtung der Pfeile B mit den Knien 8 auf die mit dem gasentleerten Airbag 5 herunterhängende Lastverteilerplatte 3 trifft.

Um hierbei eine Verletzung zu vermeiden, ist die Lastverteilerplatte 3 derart ausgebildet, daß sie bei dieser auf eine obere Begrenzungskante 10 ausgeübten Belastung in Richtung der Erstreckung der Lastverteilerplatte 3 durch Verformung nachgibt, und dem Insassen keinen großen Widerstand entgegensetzt.

Um beim Erstanprall (Pfeile A) wie auch beim Sekundäranprall (Pfeile B) die Knie 8 des Insassen zu schützen, ist die Lastverteilerplatte 3 so ausgelegt, daß sie nach der Erstbelastung annähernd ihre ursprüngliche Form wieder einnimmt, vor allem keinen Knick in Hochrichtung aufweist, so daß die Verformung beim Sekundäranprall, das heißt beim Anprall der Knie 8 des Insassen an der Begrenzungskante 10 und in Richtung der Erstreckung der Lastverteilerplatte nicht behindert wird.

Hierzu kann die Lastverteilerplatte 3 aus Hartschaum 11 (Fig. 3b), wie z.B. aus glasfaserverstärktem PU-Schaumstoff hergestellt werden, wodurch für den Erstanprall auf die Plattenfläche ein ausreichender Verformungswiderstand und die notwendige Elastizität gegeben ist, während beim Sekundäranprall auf eine Begrenzungskante 10 eine Verformung der Lastverteilerplatte 3 in ihrer Erstreckungsebene möglich ist.

Zur Erhöhung des Verformungswiderstandes beim Erstanprall auf die Plattenfläche kann die Lastverteilerplatte 3 zum Insassen hin gewölbt ausgebildet sein. Bei stabilem Material ist es weiterhin möglich, die Lastverteilerplatte in einem Querschnitt zwischen zwei Begrenzungskanten (10, 10') gewellt auszubilden, damit sie beim Sekundäranprall nachgiebig reagiert.

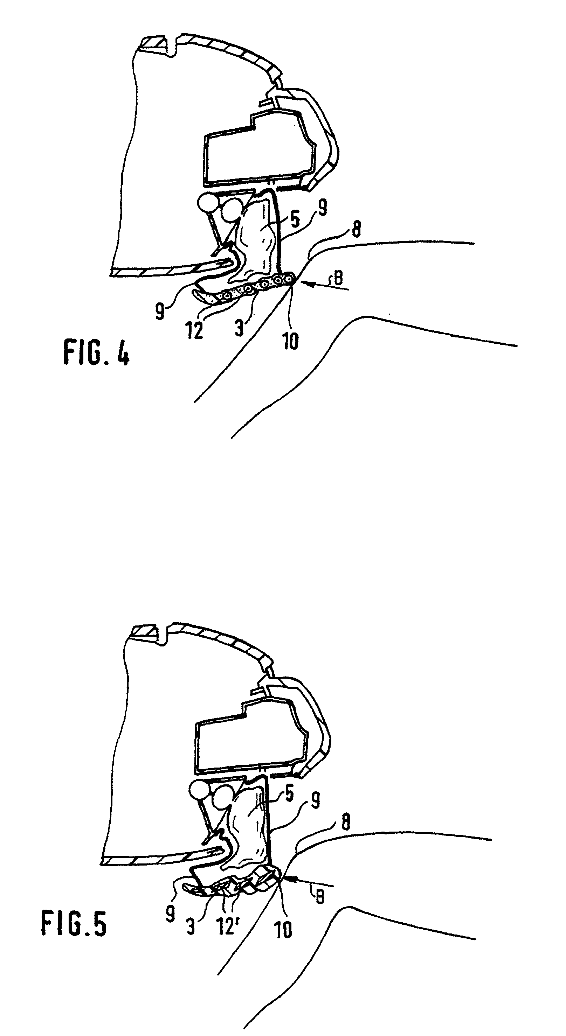

Eine weitere Ausbildungsmöglichkeit zeigen die Figuren 4 und 5, in denen die Lastverteilerplatte 3 mit Lamellen 12, 12' ausgebildet ist.

In Fig. 4 weisen die in einen Hartschaum eingelagerten, im Querschnitt lamellenförmigen Rohrstücke 12 einen runden Querschnitt auf, welcher beim Sekundäranprall (Pfeil B) zusammengedrückt werden kann, und wobei auch die Rohrstücke 12 zusammengeschoben werden können.

In Fig.5 weisen die im Querschnitt lamellenförmigen Einsätze 12' einen länglich gestreckten Querschnitt auf, und sind derart in der Lastverteilerplatte 3 ausgebildet und angeordnet, daß sie beim Erstanprall einen hohen Verformungswiderstand der Lastverteilerplatte 3 bewirken und beim Sekundäranprall mit von einer Begrenzungskante 10 ausgehender Belastung mit geringerem Widerstand zusammendrückbar sind.

## Patentansprüche

1. Knieschutz in einem Kraftfahrzeug, mit einer Lastverteilerplatte, welche einen Airbag in einem Instrumentenbereich integriert überdeckt und durch den gasbefüllbaren Airbag in Richtung auf den Insassen verschiebbar ist und bei einem Erstanprall der Insassenknie die Belastung auf das Airbagvolumen verteilt, wobei das Gas durch die Druckerhöhung im Airbag aus dem Airbag herausgedrückt wird,
**dadurch gekennzeichnet,**
**dass** die Lastverteilerplatte (3) für die Beaufschlagung bei einem Sekundäranprall (B) bei der Beaufschlagung einer Begrenzungskante in Richtung der Erstreckung der Lastverteilerplatte nachgiebig ausgebildet ist und aus einem elastisch nachgiebigen Material besteht, durch das sie nach dem Erstanprall ihre ursprüngliche Form weitgehend wieder einnimmt.

2. Knieschutz nach Anspruch 1,
**dadurch gekennzeichnet,**
**dass** die Lastverteilerplatte (3) aus Hartschaum (11) hergestellt ist.

3. Knieschutz nach Anspruch 2,
**dadurch gekennzeichnet,**
**dass** die Lastverteilerplatte (3) aus glasfaserverstärktem PU-Schaumstoff besteht.

4. Knieschutz nach Anspruch 1,
**dadurch gekennzeichnet,**
**dass** die Lastverteilerplatte (3) zum Insassenknie (8) hin gewölbt ausgebildet ist.

5. Knieschutz nach Anspruch 1,
**dadurch gekennzeichnet,**
**dass** die Lastverteilerplatte (3) mit Lamellen (12, 12') ausgebildet ist, deren Querschnitt beim Sekundäranprall (B) von einer Begrenzungskante (10) ausgehend zusammendrückbar ist.

6. Knieschutz nach Anspruch 1,
**dadurch gekennzeichnet,**
**dass** die Lastverteilerplatte (3), in einem Querschnitt gesehen, zwischen Begrenzungskanten (10, 10') gewellt ausgebildet ist.

7. Knieschutz nach Anspruch 1,
**dadurch gekennzeichnet,**
**dass** die Lastverteilerplatte (3) durch außerhalb des Airbags (5) verlaufende Fangbänder (9) im Fahrzeug gehalten ist.

8. Knieschutz nach Anspruch 1,
**dadurch gekennzeichnet,**
**dass** die Lastverteilerplatte (3) bei unbefülltem Airbag (3) in eine Instrumententafel (2) eingepasst ist.

## Claims

1. Knee protection in a motor vehicle, with a load distributor panel integrated in an instrument region, covering an air bag, and which can be pushed out towards the passenger by the air bag as it is inflated with gas and distribute the load induced by a first impact of the passenger knee through the volume of the air bag, as a result of which gas is forced out of the air bag due to the increased pressure in the air bag,
**characterised in that**
in order to take the load of a secondary impact, the load distributor panel (3) is designed so that it will give way when subjected to load from a boundary edge in the direction of extension of the load distributor panel and is made from an elastically flexible material, as a result of which it essentially resumes its original shape after the first impact.

2. Knee protection as claimed in claim 1,
**characterised in that**
the load distributor panel (3) is made from hard foam (11).

3. Knee protection as claimed in claim 2,
**characterised in that**
the load distributor panel (3) is made from PU foam reinforced with glass fibre.

4. Knee protection a claimed in claim 1,
**characterised in that**
the load distributor panel (3) is cambered towards the passenger's knee (8).

5. Knee protection as claimed in claim 1,
**characterised in that**
the load distributor panel (3) incorporates lamellar strips (12, 12'), the cross section of which can be pushed together from a boundary edge (10) on secondary impact (B).

6. Knee protection as claimed in claim 1,
**characterised in that**
as viewed in cross section, the load distributor panel (3) is of a fluted design between boundary edges (10, 10').

7. Knee protection as claimed in claim 1,
**characterised in that**
the load distributor panel (3) is retained in the vehicle by means of tether straps (9) extending outside the air bag (5).

8. Knee protection as claimed in claim 1,
**characterised in that**
the load distributor panel (3) is designed to fit in a dashboard (2) when the air bag (3) is deflated.

## Revendications

1. Dispositif de protection des genoux dans un véhicule automobile, avec une plaque de répartition de la charge recouvrant un coussin gonflable intégré dans une zone d'instruments et déplaçable dans le sens du passager par l'intermédiaire du coussin gonflable pouvant être rempli de gaz, laquelle plaque répartit la charge, lors du premier heurt contre les genoux, sur le volume du coussin gonflant, le gaz étant alors extrait du coussin gonflant du fait de l'augmentation de la pression dans le coussin gonflant, **caractérisé en ce que** la plaque de répartition de la charge (3), destinée à la sollicitation lors d'un deuxième heurt, est configurée de manière déformable pour la sollicitation d'une ligne de délimitation dans le sens de l'étirement de la plaque de répartition de la charge et consiste en un matériau élastique et déformable grâce auquel, à la suite du premier heurt, elle reprend sensiblement sa forme initiale

2. Dispositif de protection des genoux selon la revendication 1, **caractérisé en ce que** la plaque de répartition de la charge (3) est fabriquée en mousse rigide (11).

3. Dispositif de protection des genoux selon la revendication 2, **caractérisé en ce que** la plaque de répartition de la charge (3) consiste en une mousse de polyuréthane renforcée à la fibre de verre.

4. Dispositif de protection des genoux selon la revendication 1, **caractérisé en ce que** la plaque de répartition de la charge (3) est bombée en direction du genoux du passager (8).

5. Dispositif de protection des genoux selon la revendication 1, **caractérisé en ce que** la plaque de répartition de la charge (3) comporte des lamelles (12, 12') dont la section peut être écrasée à partir d'une arête de délimitation (10) lors du heurt secondaire (B).

6. Dispositif de protection des genoux selon la revendication 1, **caractérisé en ce que** la plaque de répartition de la charge (3), vu en une section, est configurée de manière ondulée entre des arêtes de délimitation (10, 10').

7. Dispositif de protection des genoux selon la revendication 1, **caractérisé en ce que** la plaque de répartition de la charge (3) est maintenue dans le véhicule par des rubans de fixation (9) passant à l'extérieur du coussin gonflable (5).

8. Dispositif de protection des genoux selon la revendication 1, **caractérisé en ce que** la plaque de répartition de la charge (3) est encastrée dans un tableau de bord (2), lorsque le coussin gonflable (3) n'est pas rempli.
